(19) Europäisches Patentamt
European Patent Office
Office européen des brevets

(11) EP 4 027 429 A1

(12) # EUROPEAN PATENT APPLICATION
published in accordance with Art. 153(4) EPC

(43) Date of publication:
**13.07.2022 Bulletin 2022/28**

(21) Application number: **20860649.1**

(22) Date of filing: **03.09.2020**

(51) International Patent Classification (IPC):
***H01M 10/0567*** *(2010.01)* ***H01M 10/052*** *(2010.01)*
***C07F 9/14*** *(2006.01)* ***C07F 9/09*** *(2006.01)*

(52) Cooperative Patent Classification (CPC):
**C07F 9/09; C07F 9/14; H01M 10/052; H01M 10/0567;** Y02E 60/10

(86) International application number:
**PCT/KR2020/011861**

(87) International publication number:
**WO 2021/045530 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2019 KR 20190109724**
**13.02.2020 KR 20200017459**

(71) Applicant: **Dongwoo Fine-Chem Co., Ltd.**
**Iksan-si, Jeollabuk-do 54631 (KR)**

(72) Inventors:
- **SONG, Kwan-Wook**
**Pyeongtaek-si, Gyeonggi-do 17870 (KR)**
- **JUNG, Kyoung-Moon**
**Yeonggwang-gun, Jeollanam-do 57027 (KR)**
- **LEE, Sang-Jin**
**Pyeongtaek-si, Gyeonggi-do 17937 (KR)**

(74) Representative: **Cabinet Chaillot**
**16/20, avenue de l'Agent Sarre**
**B.P. 74**
**92703 Colombes Cedex (FR)**

(54) **ELECTROLYTE FOR LITHIUM SECONDARY BATTERY, AND LITHIUM SECONDARY BATTERY INCLUDING SAME**

(57) The present invention relates to an electrolyte for a lithium secondary battery and a lithium secondary battery including the same. The electrolyte for a lithium secondary battery and the lithium secondary battery including the same according to the present invention exhibit flame retardancy, and thus have the advantage of being able to provide excellent reliability. The lithium secondary battery exhibits high output performance and has excellent cycle life characteristics, high-temperature stability, and high-temperature voltage preservation stability, and thus has the advantage of high battery reliability.

EP 4 027 429 A1

## Description

### Technical Field

The present invention relates to an electrolyte for a lithium secondary battery and a lithium secondary battery including the same.

### Background Art

As miniaturization and weight reduction of electronic equipment have been realized and the use of portable electronic devices has been generalized, studies on secondary batteries having high energy density, which serve as power sources for them, have been actively conducted.

Examples of the secondary batteries include a nickel-cadmium battery, a nickel-metal hydride battery, a nickel-hydrogen battery, and a lithium secondary battery. Among them, there have been active studies on the lithium secondary battery which not only exhibits a discharge voltage that is two or more times higher than those of conventional batteries that use an aqueous alkali solution, but also has high energy density per unit weight and can be rapidly charged.

In general, the lithium secondary battery is manufactured by using materials capable of intercalating and deintercalating lithium ions as a positive electrode and a negative electrode and injecting a non-aqueous electrolyte between the positive electrode and the negative electrode, and generates electrical energy by oxidation and reduction reactions upon intercalation and deintercalation of lithium ions in the positive electrode and the negative electrode.

Meanwhile, the internal resistance of the lithium secondary battery should be small in order to enhance the capacity of the lithium secondary battery, but increasing the internal resistance is advantageous in terms of the safety of the battery. The capacity and safety of the lithium secondary battery are closely related to the properties of the non-aqueous electrolyte composed of a combination of a solute such as an electrolyte salt and a non-aqueous organic solvent.

In general, lithium-based additives such as $LiSO_2$ and $LiPO_2F_2$ are commonly used as additives to electrolytes for lithium secondary batteries. However, conventional lithium-based additives have somewhat low solubility, and thus when these additives are used in excessive amounts in the preparation of electrolytes, a problem arises in that the additives are precipitated in the electrolytes.

Japanese Patent Application Publication No. 2004-031079 relates to a non-aqueous electrolyte secondary battery, and discloses a non-aqueous electrolyte secondary battery: including a positive electrode; an negative electrode including a material capable of absorbing and releasing lithium; and a non-aqueous electrolyte including a non-aqueous solvent and a lithium salt, wherein the non-aqueous electrolyte contains a difluorophosphate represented by the formula (1) $M(PO_2F_2)_x$, wherein M is either a metal atom having a bond dissociation energy of 560 $kJmol^{-1}$ or less with a fluorine atom at an absolute temperature of 0 K, or $N(R)_4$, wherein Rs may be the same as or different from each other, are each a hydrogen atom or an organic group having 1 to 12 carbon atoms, and may be bonded to each other directly or via a nitrogen atom to form a ring, and when M is a metal atom, x is the valence of the metal atom M and is an integer greater than or equal to 1, and when M is $N(R)_4$, x is 1.

However, in the case of the above patent document, problems arise in that the reliability of the non-aqueous electrolyte is low, and for this reason, when the non-aqueous electrolyte is applied to a lithium secondary battery, the durability of the lithium secondary battery is also lowered.

Therefore, there is a need for the development of a compound having excellent reliability and good solubility, specifically, a compound that exhibits excellent performance when used as an electrolyte for a lithium secondary battery.

### DISCLOSURE

### Technical Problem

The present invention is intended to provide an electrolyte for a lithium secondary battery having excellent reliability and capable of providing high output performance.

The present invention is also intended to provide a lithium secondary battery having excellent reliability, such as room-temperature cycle life characteristics, high-temperature stability, and high-temperature voltage preservation stability.

### Technical Solution

The present invention provides an electrolyte for a lithium secondary battery containing a phosphate-based compound represented by the following Formula 1:

[Formula 1]

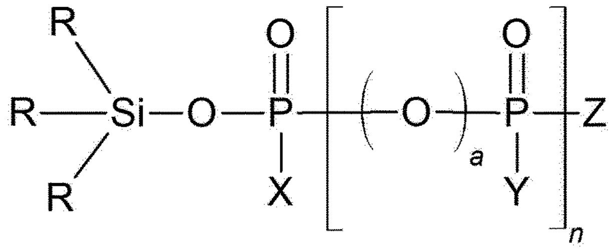

wherein

X is a halogen or -OM,
Ys are each independently a halogen, -OM or $-OPOZ_2$,
Zs are each independently a halogen, $-OSiR_3$ or -OM,
Rs are each independently a C1 to C6 alkyl group or allyl group,
Ms are each independently lithium, sodium or potassium,
a is 0 or 1, and
n is an integer ranging from 0 to 6.

The present invention also provides a lithium secondary battery including the electrolyte for a lithium secondary battery.

**Advantageous Effects**

The electrolyte for a lithium secondary battery and a lithium secondary battery including the same according to the present invention exhibit flame retardancy, and thus have the advantage of being able to provide excellent reliability.

In addition, the electrolyte for a lithium secondary battery and a lithium secondary battery including the same according to the present invention exhibit high output performance, and have excellent cycle life characteristics, high-temperature stability and high-temperature voltage preservation stability, and thus the battery has high reliability.

**Best Mode**

The present invention provides an electrolyte for a lithium secondary battery containing a phosphate-based compound represented by the following Formula 1, and a lithium secondary battery including the electrolyte for a lithium secondary battery:

[Formula 1]

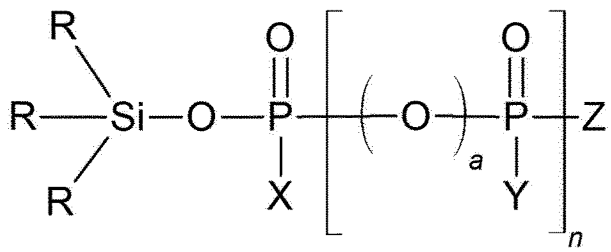

wherein

X is a halogen or -OM,
Ys are each independently a halogen, -OM or $-OPOZ_2$,
Zs are each independently a halogen, $-OSiR_3$ or -OM,
Rs are each independently a C1 to C6 alkyl group or allyl group,
Ms are each independently lithium, sodium or potassium,

a is 0 or 1, and
n is an integer ranging from 0 to 6.

**Mode for Invention**

Hereinafter, the present invention will be described in more detail.

In the present invention, when any part is referred to as "including" any component, it does not exclude other components, but may further include other components, unless otherwise specified.

## <Electrolyte for Lithium Secondary Battery>

The present invention provides an electrolyte for a lithium secondary battery containing a phosphate-based compound represented by the following Formula 1:

[Formula 1]

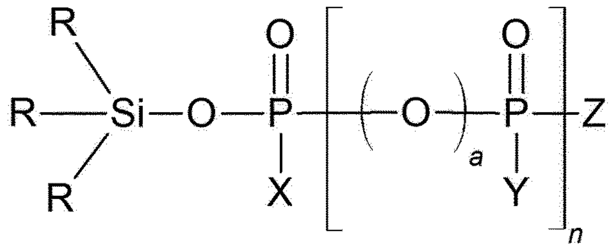

wherein

X is a halogen or -OM,
Ys are each independently a halogen, -OM or $-OPOZ_2$,
Zs are each independently a halogen, $-OSiR_3$ or -OM,
Rs are each independently a C1 to C6 alkyl group or allyl group,
Ms are each independently lithium, sodium or potassium,
a is 0 or 1, and
n is an integer ranging from 0 to 6.

In the present invention, the halogen is F, Cl, Br or I.

In the present invention, the alkyl group may be linear or branched, and examples thereof include, but are not limited to, methyl, ethyl, n-propyl, isopropyl, n-butyl, isobutyl, tert-butyl, sec-butyl, 1-methyl-butyl, 1-ethyl-butyl, n-pentyl, isopentyl, neopentyl, tert-pentyl, n-hexyl, isohexyl, 2-methylpentyl, and the like.

In the present invention, the allyl group may be, for example, vinyl, phenyl, or naphthyl, but is not limited thereto.

In the present invention, $-OPOZ_2$ refers to $-OP(=O)Z_2$.

In the present invention, when n is an integer of 2 or greater, the structures in [ ] in Formula 1 may be the same as or different from each other.

Specifically, in Formula 1, R may be a C1 to C6 alkyl group, and this case is preferable because the above-described effect can be maximized.

Lithium-based additives such as $Li_2PO_2F$ and $LiPO_2F_2$, which have been widely used conventionally as electrolytes for lithium secondary batteries, have somewhat low solubility and have a problem of lowering reliability when used alone.

Since the phosphate-based compound represented by Formula 1 according to the present invention contains at least one $-OSiR_3$ moiety, such as a trialkylsilyl oxide moiety, in the molecule thereof, it has the advantages of improving reliability by removing the hydrofluoric acid and moisture present in the electrolyte and of improving solubility by increasing lipophilicity.

In addition, the O=P- structure of the phosphate-based compound has an electron donor property, and when another electron donor such as trialkylsilyl oxide is included in the same molecule, electrons may be relatively concentrated on the electron withdrawing group, and thus the functional group having an electron donor property may be easily detached. In addition, the O=P-X structure may combine with the electron-withdrawing halogen (e.g., fluorine), and thus

prevent the electron donor from being easily detached due to weakening of the electron donor property of the O=P- structure, thereby maintaining an appropriate energy balance.

Due to the above-described characteristics, when the phosphate-based compound according to the present invention is contained in the electrolyte for a lithium secondary battery, it has an advantage in that it preferentially reacts with $H_2O$, HF and $PF_5$ produced as by-products in the electrolyte to lower the activity of the by-products, thereby increasing the cycle life of the lithium secondary battery.

In addition, in the case where X in Formula 1 is -OM, an electron donor stronger than the performance of the existing electron donor is introduced and easily detached in the form of metal ions ($M^+$), thereby improving ionic conductivity in the electrolyte, and the remaining dissolved anions do not detach/precipitate in the solvent and thus do not act as resistance in the electrolyte.

In particular, when X in Formula 1 is -OM, the phosphate-based compound may exist in a salt form, and also has the advantage of being able to provide antistatic properties in addition to the above-described performance. Specifically, the phosphate-based compound has better solubility than additives that are widely used as lithium salt compounds contained in electrolytes for lithium secondary batteries, and when it exists in a salt form, particularly a lithium salt form, it has excellent stability, and thus may also be used in other applications such as antistatic agents.

When X in Formula 1 is not halogen or -OM, but is, for example, $-OSiR_3$, trialkylsilyl oxide as an electron donor excessively increases, and thus if it reacts with $H_2O$ and HF, which are by-products of the electrolyte, gaseous by-product such as trialkylsilyl hydroxide or trialkylsilyl fluoride may be produced. If there are a large number of these functional groups, a problem may arise in that the frequency of gas generation increases, and thus the overall thickness of the cell is increased during high-temperature storage, thereby degrading the performance of the battery. In addition, a problem may arise in that, as the content of Ni in the electrode increases, the amount of by-products increases, thereby further degrading the performance of the battery.

In addition, the electrolyte for a lithium secondary battery according to the present invention has advantages of excellent high-temperature cycle life and flame retardancy characteristics. If a cell in a lithium secondary battery is destroyed, the temperature of the battery cell may rapidly rise due to the chemical reaction of the electrolyte, leading to a fire. In addition, conventional electrolytes for lithium secondary batteries have a low ignition temperature, and thus have a problem in that these electrolytes are easily ignited when they leak.

However, the electrolyte for a lithium secondary battery according to the present invention has excellent flame retardancy, and thus when it is contained as an electrolyte for a lithium secondary battery, it acts as a flame retardant and has the advantage of improving cell stability. The flame retardancy can be confirmed through a flame test.

Specifically, the electrolyte for a lithium secondary battery according to the present invention has excellent flame retardancy by containing the phosphate-based compound represented by Formula 1, and thus has an advantage in that it can be self-extinguished upon the occurrence of accidents such as ignition and energy storage system (ESS) explosion caused by lithium secondary batteries, thereby minimizing damage.

In one embodiment of the present invention, the phosphate-based compound represented by Formula 1 may be represented by any one of the following Formulas 2 to 7:

[Formula 2]

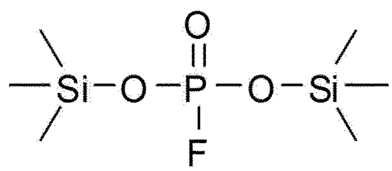

[Formula 3]

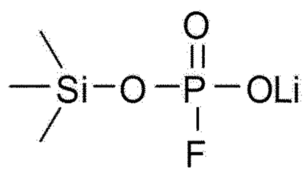

[Formula 4]

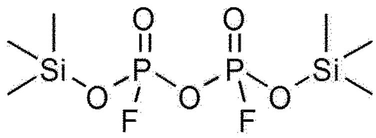

[Formula 5]

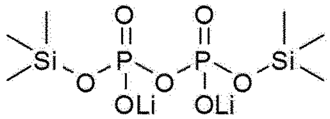

[Formula 6]

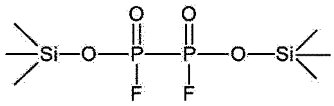

[Formula 7]

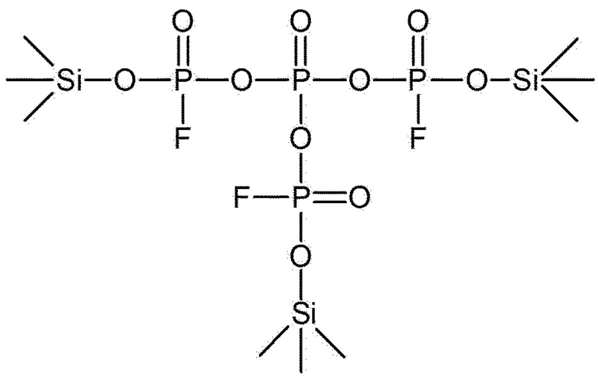

The electrolyte for a lithium secondary battery according to the present invention contains the phosphate-based compound represented by any one of Formulas 2 to 7, and thus has the advantage of improving reliability by removing hydrofluoric acid in the electrolyte. In particular, the electrolyte has the advantages of enabling high output of the battery by forming a stable inorganic layer on the surface of the positive electrode and of providing excellent durability and flame retardancy while replacing conventional lithium-based additives.

Since the phosphate-based compound represented by any one of Formulas 2 to 7 contains at least one $-OSiR_3$ moiety, for example, a trialkylsilyl oxide moiety, in the molecule thereof, it has an advantage of excellent solubility in a non-aqueous solvent due to its high lipophilicity. In addition, the phosphate-based compound according to the present invention has advantages of excellent reliability, such as room-temperature cycle life characteristics and high-temperature stability.

In addition, since the phosphate-based compound contains the O=P-X structure that combines with the electron-withdrawing halogen, it may prevent the electron donor from being easily detached due to weakening of the electron donor property of the O=P- structure, thereby maintaining an appropriate energy balance. In addition, the phosphate-based compound has an advantage in that it preferentially reacts with $H_2O$, HF and $PF_5$ produced as by-products in the electrolyte for a lithium secondary battery to lower the activity of the by-products, thereby increasing the cycle life of the lithium secondary battery.

In addition, when X in Formulas 2 to 7 is -OM, an electron donor stronger than the performance of the existing electron donor is introduced and easily detached in the form of metal ions ($M^+$), thereby improving ionic conductivity in

the electrolyte, and the remaining dissolved anions do not detach/precipitate in the solvent and thus do not act as resistance in the electrolyte.

In particular, when X in Formulas 2 to 7 is -OM, the phosphate-based compound may exist in a salt form, and also has the advantage of being able to provide antistatic properties in addition to the above-described performance. Specifically, when the phosphate end group is ionized, the phosphate-based compound may also be used as an additive capable of improving antistatic performance.

The phosphate-based compound according to the present invention may be contained in an amount of 0.01 to 30 parts by weight, preferably 0.1 to 10 parts by weight, more preferably 0.2 to 10 parts by weight, based on 100 parts by weight of the total weight of the electrolyte for a lithium secondary battery.

When the phosphate-based compound is contained in an amount within the above range, it is preferable because the effect of improving reliability, in particular, room-temperature cycle life characteristics, high-temperature stability, high-temperature cycle life characteristics, high-temperature voltage preservation stability, etc. is maximized.

In another embodiment of the present invention, the electrolyte for a lithium secondary battery may further contain at least one selected from the group consisting of a lithium salt and an organic solvent.

## Lithium Salt

The lithium salt acts as a source of lithium ions in the lithium secondary battery, and facilitates the movement of lithium ions between the positive electrode and the negative electrode, thereby enabling the basic operation of the lithium secondary battery.

The concentration of the lithium salt may be 0.1 to 2.0 M, preferably 0.5 to 1.5 M, but is not limited thereto. However, when the concentration of the lithium salt is within the above range, the conductivity and viscosity of the electrolyte become suitable. Specifically, this case is preferable because it is possible to suppress a phenomenon in which the performance of the electrolyte is degraded due to lowering of the conductivity of the electrolyte, and it is possible to suppress a phenomenon in which the mobility of lithium ions is reduced due to an increase in the viscosity of the electrolyte. In short, when the concentration of the lithium salt is within the above range, there are advantages in that the performance of the electrolyte is excellent due to its excellent conductivity, and the viscosity of the electrolyte is suitable so that the mobility of lithium ions excellent. However, the concentration of the lithium salt is not limited within the above range, and may be appropriately increased or decreased as needed.

The lithium salt may be, for example, one or a mixture of two or more selected from the group consisting of $LiPF_6$, $LiBF_4$, $LiSbF_6$, $LiAsF_6$, $LiClO_4$, $LiCF_3SO_3$, $LiN(SO_2F)_2$, $LiN(SO_2CF_3)_2$, $Li(CF_3SO_2)_2N$, $LiN(SO_3C_2F_5)_2$, $LiB(C_2O_4)_2$, $LiN(SO_2C_2F_5)_2$, $Li(CF_3SO_3)$, $LiC(SO_2CF_3)_3$, $LiN(SO_3CF_3)_2$, $LiC_4F_9SO_3$, $LiAlO_4$, $LiAlO_2$, $LiB(C_2O_4)_2$, $LiAlCl_4$, $Li(CH_3CO_2)$, $Li(FSO_2)_2N$, $Li(CF_3SO_2)_3C$, LiCl, LiBr and LiI, but is not limited thereto. However, this case is preferable because there are advantages in that the mobility of lithium ions is excellent, and the conductivity of the electrolyte is excellent so that the performance of the electrolyte is excellent.

## Organic Solvent

The organic solvent may be a non-aqueous solvent. The non-aqueous solvent may serve as a medium through which ions involved in the electrochemical reaction of the lithium secondary battery can move.

As the non-aqueous solvent, one commonly used in the art may be used without particular limitation. For example, the non-aqueous solvent may be a carbonate-based solvent, an ester-based solvent, an ether-based solvent, a ketone-based solvent, an alcohol-based solvent, or other aprotic solvent. These solvents may be used alone or in combination of two or more.

As the carbonate-based solvent, a chain carbonate-based solvent, a cyclic carbonate-based solvent, or a combination thereof may be used.

Examples of the chain carbonate-based solvent include diethyl carbonate (DEC), dimethyl carbonate (DMC), dipropyl carbonate (DPC), methylpropyl carbonate (MPC), ethylpropyl carbonate (EPC), ethylmethyl carbonate (EMC), and combinations thereof, and examples of the cyclic carbonate-based solvent include ethylene carbonate (EC), propylene carbonate (PC), butylene carbonate (BC), vinylethylene carbonate (VEC), and combinations thereof.

Examples of the ester-based solvent that may be used include methyl acetate, ethyl acetate, n-propyl acetate, pentyl acetate, methyl propionate, ethyl propionate, butyl propionate, γ-butyrolactone, decanolide, valonolactone, mevalonolactone, caprolactone, methyl formate, ethyl formate, propyl formate, and the like.

Examples of the ether-based solvent that may be used include dibutyl ether, tetraglyme, diglyme, 1,2-dimethoxyethane, 1,2-diethoxyethane, ethoxymethoxyethane, 2-methyltetrahydrofuran, tetrahydrofuran, and the like.

Examples of the ketone-based solvent that may be used include cyclohexanone and the like.

Examples of the alcohol-based solvent that may be used include ethyl alcohol, isopropyl alcohol, and the like.

Examples of the other aprotic solvents that may be used include dimethylsulfoxide, 1,2-dioxolane, sulfolane,

methylsulfolane, 1,3-dimethyl-2-imidazolidinone, N-methyl-2-pyrrolidinone, formamide, dimethylformamide, acetonitrile, nitromethane, trimethyl phosphate, triethyl phosphate, trioctyl phosphate, and the like.

Alternatively, the organic solvent may include one or more solvents selected from the group consisting of high dielectric constant solvents and low boiling point solvents.

Specifically, the high dielectric constant solvent is not particularly limited as long as it is commonly used in the art, and examples thereof include cyclic carbonates such as fluorinated ethylene carbonate, ethylene carbonate, propylene carbonate, butylene carbonate, or 1-fluorinated ethylene carbonate, gamma-butyrolactone, and/or mixtures thereof.

Examples of the low boiling point solvent that may be used include, but are not limited to, chain carbonates such as dimethyl carbonate, ethylmethyl carbonate, diethyl carbonate or dipropyl carbonate, dimethoxyethane, diethoxyethane, fatty acid ester derivatives, and/or mixtures thereof.

The organic solvent may be contained in an amount that satisfies 100 parts by weight of the total weight of the electrolyte for a lithium secondary battery, and this case is preferable because the desired effects of the above-described lithium salt and compound are excellent.

The electrolyte for a lithium secondary battery according to the present invention may further contain an additive in addition to the phosphate-based compound represented by Formula 1.

When the additive is further contained, there is an advantage in that the effect of the compound represented by Formula 1 is further maximized.

The additive may be, for example, at least one selected from the group consisting of fluorocarbonate, vinylene carbonate, fluoroethylene carbonate, oxalyltetrafluorophosphate lithium salt, bis(oxalyl)difluorophosphate lithium salt, trisoxalylphosphate lithium salt, and $LiPO_2F_2$.

The additive may be contained in an amount of 0.5 to 10 parts by weight, specifically 1 to 3 parts by weight, based on 100 parts by weight of the total weight of the electrolyte for a lithium secondary battery, and this case is preferable because there is an advantage in that the reliability of the lithium secondary battery may be further increased.

The electrolyte for a lithium secondary battery according to the present invention may be specifically a non-aqueous electrolyte, and the compound of the present invention may be specifically used as an additive to the non-aqueous electrolyte.

The electrolyte for a lithium secondary battery according to the present invention has excellent solubility and an excellent effect of forming a layer on the surface of the positive electrode, thereby providing an excellent effect of improving reliability such as cycle life characteristics and high-temperature stability.

**<Lithium Secondary Battery>**

Another aspect of the present invention is directed to a lithium secondary battery including the above-described electrolyte for a lithium secondary battery.

The lithium secondary battery according to the present invention may be manufactured by injecting the electrolyte for a lithium secondary battery into an electrode structure including a positive electrode, a negative electrode, and a separator interposed between the positive electrode and the negative electrode. As the positive electrode, negative electrode and separator constituting the electrode structure, those commonly used in the manufacture of lithium secondary batteries may be used.

The positive electrode and the negative electrode are prepared by applying a positive electrode active material slurry and a negative electrode active material slurry to the respective electrode current collectors.

The positive electrode includes a positive electrode current collector and a positive electrode active material layer formed on the positive electrode current collector, and the negative electrode includes a negative electrode current collector and a negative electrode active material layer formed on the negative electrode current collector.

The positive electrode current collector may be used without particular limitation as long as it has conductivity without causing a chemical change in the lithium secondary battery. Specifically, as the positive electrode current collector, aluminum, copper, stainless steel, nickel, titanium, calcined carbon, copper or stainless steel surface-treated with carbon, nickel, titanium, silver or the like, an aluminum-cadmium alloy, or the like may be used, and in particular, aluminum may be used.

The positive electrode current collector may have various shapes such as a foil, a net, or a porous body, and fine irregularities may be formed on the surface thereof to enhance the adhesion of the positive electrode active material, but the present invention is not limited thereto.

The thickness of the positive electrode current collector may be 3 to 500 $\mu$m.

As the positive electrode active material, a positive electrode active material capable of intercalating and deintercalating lithium ions, known in the art, may be used without particular limitation. Specifically, as the positive electrode active material, one or more of complex oxides or complex phosphates of lithium and a metal selected from among cobalt, manganese, nickel, aluminum, iron, and combinations thereof may be used. For example, lithium cobalt oxide,

lithium nickel oxide, lithium manganese oxide, lithium nickel cobalt manganese oxide, lithium nickel cobalt aluminum oxide, or lithium iron phosphate may be used. As a representative example, the following lithium-containing compounds may be used:

$Li_xMn_{1-y}M_yA_2$ (1)

$Li_xMn_{1-y}M_yO_{2-z}X_z$ (2)

$Li_xMn_2O_{4-z}X_z$ (3)

$Li_xMn_{2-y}M_yM'_zA_4$ (4)

$Li_xCo_{1-y}M_yA_2$ (5)

$Li_xCo_{1-y}M_yO_{2-z}X_z$ (6)

$Li_xNi_{1-y}M_yA_2$ (7)

$Li_xNi_{1-y}M_yO_{2-z}X_z$ (8)

$Li_xNi_{1-y}CO_yO_{2-z}X_z$ (9)

L

$i_xNi_{1-y-z}Co_yM_zA_\alpha$ (10)

$Li_xNi_{1-y-z}Co_yM_zO_{2-\alpha}X_\alpha$ (11)

$Li_xNi_{1-y-z}Mn_yM_zA_\alpha$ (12)

$Li_xNi_{1-y-z}Mn_yM_zO_{2-\alpha}X_\alpha$ (13)

wherein $0.9 \leq x \leq 1.1$, $0 \leq y \leq 0.5$, $0 \leq z \leq 0.5$, and $0 \leq \alpha \leq 2$, M and M' are the same as or different from each other and are selected from the group consisting of Mg, Al, Co, K, Na, Ca, Si, Ti, Sn, V, Ge, Ga, B, As, Zr, Mn, Cr, Fe, Sr, V and rare earth elements, A is selected from the group consisting of O, F, S and P, and X is selected from the group consisting of F, S and P.

Preferably, as the positive electrode active material, for example, lithium cobalt oxide, lithium nickel oxide, lithium nickel cobalt manganese oxide, lithium nickel cobalt aluminum oxide, or lithium iron phosphate may be used. Specifically, the following lithium-containing compounds may be used:

$Li_xCo_{1-y}M_yA_2$ (1)

L

$i_xCo_{1-y}M_yO_{2-z}X_z$ (2)

$Li_xNi_{1-y}M_yA_2$ (3)

$Li_xNi_{1-y}M_yO_{2-z}X_z$ (4)

$Li_xNi_{1-y}Co_yO_{2-z}X_z$ (5)

$Li_xNi_{1-y-z}Co_yM_zA_\alpha$ (6)

$Li_xNi_{1-y-z}Co_yM_zO_{2-\alpha}X_\alpha$ (7)

$Li_xNi_{1-y-z}Mn_yM_zA_\alpha$ (8)

$Li_xNi_{1-y-z}Mn_yM_zO_{2-\alpha}X_\alpha$ (9)

wherein $0.9 \le x \le 1.1$, $0 \le y \le 0.5$, $0 \le z \le 0.5$, and $0 \le \alpha \le 2$, M and M' are the same as or different from each other and are selected from the group consisting of Mg, Al, Co, K, Na, Ca, Si, Ti, Sn, V, Ge, Ga, B, As, Zr, Mn, Cr, Fe, Sr, V and rare earth elements, A is selected from the group consisting of O, F, S and P, and X is selected from the group consisting of F, S and P.

More preferably, the positive electrode active material may be a positive electrode active material containing lithium and nickel. As the positive electrode active material containing lithium and nickel, for example, lithium nickel oxide, lithium nickel cobalt manganese oxide, or lithium nickel cobalt aluminum oxide may be used. Specifically, a lithium nickel-based metal oxide represented by the following formula may be used:

$$Li_xNi_{1-y}M_yO_2 \qquad (1)$$

wherein M is selected from the group consisting of Mg, Al, Co, K, Na, Ca, Si, Ti, Sn, V, Ge, Ga, B, As, Zr, Mn, Cr, Fe, Sr, V, rare earth elements, and combinations thereof, and x and y may be in the ranges of $0.9 \le x \le 1.1$ and $0 \le y < 0.7$, respectively.

The lithium nickel-based metal oxide containing nickel in the above range may provide a battery with improved cycle life characteristics while maintaining high capacity characteristics, and may provide a lithium secondary battery having excellent high-temperature cycle life characteristics.

Specifically, high-Ni-based lithium metal oxide has a disadvantage in that crystallinity degradation thereof occurs due to a change in the oxidation number of Ni during a calcination process, resulting in a decrease in the initial efficiency, a decrease in the cycle life characteristic, and an increase in the surface residual lithium, as well as the decrease in the thermal stability due to a side reaction with the electrolyte, generation of high-temperature gas, and the like. When the phosphate-based compound according to the present invention is contained in an electrolyte for a lithium secondary battery, it acts to reduce the activity of by-products, thus increasing the cycle life of the lithium secondary battery, and exhibits flame retardancy. Thus, it has the advantages of exhibiting high output performance and providing excellent cycle life characteristics, high-temperature stability and high-temperature voltage preservation stability, thereby increasing the reliability of the battery.

The negative electrode current collector may be used without particular limitation as long as it has conductivity without causing chemical changes in the lithium secondary battery. For example, as the negative electrode current collector, copper, aluminum, stainless steel, nickel, titanium, calcined carbon, copper or stainless steel surface-treated with carbon, nickel, titanium, silver or the like, an aluminum-cadmium alloy, or the like may be used, and in particular, copper may be used.

The negative electrode current collector may have various shapes such as a foil, a net, or a porous body, and fine irregularities may be formed on the surface thereof to enhance the adhesion of the negative electrode active material, but the present invention is not limited thereto.

The thickness of the negative electrode current collector may be 3 to 500 μm.

As the negative electrode active material, a negative electrode active material capable of intercalating and deintercalating lithium ions, known in the art, may be used without particular limitation. Examples of the negative electrode active material that may be used include carbonaceous materials such as crystalline carbon, amorphous carbon, carbon composites, or carbon fiber, lithium metal, an alloy of lithium metal, a material capable of doping and dedoping lithium, a transition metal oxide, and the like.

Examples of the amorphous carbon include soft carbon, hard carbon, coke, mesocarbon microbeads (MCMBs) calcined at 1500°C or lower, mesophase pitch-based carbon fiber (MPCF), and the like. Examples of the crystalline carbon include graphite-based materials, such as amorphous, plate-like, flake-like, spherical or fibrous graphite, specifically natural graphite, artificial graphite, graphitized coke, and graphitized MCMB, graphitized MPCF, and the like.

As the alloy of lithium metal, an alloy of lithium and a metal selected from the group consisting of Na, K, Rb, Cs, Fr, Be, Mg, Ca, Sr, Si, Sb, Pb, In, Zn, Ba, Ra, Ge, Al and Sn may be used.

Examples of the material capable of doping and dedoping lithium include Si, a Si-C composite, SiOx ($0 < x < 2$), a Si-Q alloy (wherein Q is an element selected from the group consisting of alkali metals, alkaline earth metals, group 13 elements, group 14 elements, group 15 elements, group 16 elements, transition metals, rare earth elements, and combinations thereof, and is not Si), Sn, $SnO_2$, a Sn-R alloy (wherein R is an element selected from the group consisting of alkali metals, alkaline earth metals, group 13 elements, group 14 elements, group 15 elements, group 16 elements, transition metals, rare earth elements, and combinations thereof, and is not Sn), and the like. At least one of these materials may also be used in combination with $SiO_2$. As the elements Q and R, those selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof may be used.

Examples of the transition metal oxide include vanadium oxide, lithium vanadium oxide, or lithium titanium oxide.

The carbonaceous material is preferably a material having a d002 interplanar distance of 3.35 to 3.38 Å and a crystallite size (Lc) of 20 nm or more as measured by X-ray diffraction. As the lithium alloy, an alloy of lithium and

aluminum, zinc, bismuth, cadmium, antimony, silicon, lead, tin, gallium, or indium may be used.

Each of the positive electrode active material and the negative electrode active material may be mixed with a binder and a solvent, thus preparing a positive electrode active material slurry and a negative electrode active material slurry.

The binder is a material playing a role in formation of the active material into paste, mutual adhesion of the active materials, adhesion to the current collector, and a buffer effect against expansion and contraction of the active material, and examples thereof include carboxymethyl cellulose, hydroxypropyl cellulose, diacetyl cellulose, carboxylated polyvinyl chloride, polyvinyl fluoride, polyurethane, polyethylene, polypropylene, acrylated styrene-butadiene rubber, epoxy resin, nylon, polyvinylidene fluoride, a polyhexafluoropropylene-polyvinylidene fluoride copolymer (P(VdF/HFP)), poly(vinyl acetate), polyvinyl alcohol, polyethylene oxide, polyvinyl pyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and the like. The content of the binder is 0.1 to 30 wt %, preferably 1 to 10 wt %, based on 100 parts by weight of the total weight of the electrode active material. If the content of the binder is excessively low, the adhesion between the electrode active material and the current collector will be insufficient, and if the content of the binder is excessively high, the adhesion will be better, but the content of the electrode active material will be reduced by the increased amount of the binder, which is disadvantageous in increasing the battery capacity.

As a solvent for the active material slurry, a non-aqueous solvent or an aqueous solvent may generally be used. Examples of the non-aqueous solvent include, but are not limited to, N-methyl-2-pyrrolidone (NMP), dimethylformamide, dimethylacetamide, N,N-dimethylaminopropylamine, ethylene oxide, and tetrahydrofuran, and examples of the aqueous solvent include, but are not limited to, water, isopropyl alcohol, etc.

If necessary, the electrode active material slurry may further contain a conductive material, a thickener, and the like.

The conductive material is a material that improves electronic conductivity, and may be used without limitation as long as it has electronic conductivity without causing chemical changes. Specifically, at least one selected from the group consisting of a graphite-based conductive material, a carbon black-based conductive material, and a metal or metal compound-based conductive material may be used as the conductive material. Examples of the graphite-based conductive material include artificial graphite, natural graphite, and the like, and examples of the carbon black-based conductive material include acetylene black, ketjen black, denka black, thermal black, channel black, carbon fiber, etc. Examples of the metal or metal compound-based conductive material include copper, nickel, aluminum, silver, tin, tin oxide, tin phosphate ($SnPO_4$), titanium oxide, potassium titanate, and perovskite materials such as $LaSrCoO_3$ and $LaSrMnO_3$. In addition, a conductive polymer such as a polyphenylene derivative may be used, but examples of the conductive material are not limited to the conductive materials listed above.

The content of the conductive material is preferably 0.1 to 10 parts by weight based on 100 parts by weight of the total weight of the electrode active material. If the content of the conductive material is less than 0.1 parts by weight, electrochemical properties may be degraded, and if the content of the conductive material is more than 10 parts by weight, energy density per weight may decrease.

The thickener is not particularly limited as long as it can serve to control the viscosity of the active material slurry, but for example, carboxymethyl cellulose, hydroxymethyl cellulose, hydroxyethyl cellulose, hydroxypropyl cellulose, etc. may be used.

The positive electrode and negative electrode active material slurries prepared as described above are applied to electrode current collectors, thereby preparing positive and negative electrodes, rspectively.

Copper or a copper alloy may be used as the negative electrode current collector. Examples of the shape of each of the positive electrode current collector and the negative electrode current collector include a foil, a film, a sheet, a punched one, a porous body, a foam, or the like.

The positive electrode and the negative electrode may be separated from each other by a separator. Specifically, a separator is interposed between the prepared positive electrode and negative electrode to obtain an electrode structure. Then, the electrode structure is accommodated in a battery case, and an electrolyte is injected thereinto, thus manufacturing a lithium secondary battery. The separator may be used without particular limitation as long as it is commonly used in the art. In particular, a separator having low resistance to ion movement in the electrolyte and an excellent ability to impregnate the electrolyte is preferably used. The separator may be a conventional porous polymer film or a porous nonwoven fabric, which is conventionally used as a separator, and for example, the separator may be made of a material selected from among an ethylene homopolymer, a propylene homopolymer, an ethylene/butene copolymer, an ethylene/hexene copolymer, an ethylene/methacrylate copolymer, polyester, Teflon, polytetrafluoroethylene, glass fiber having a high melting point, and polyethylene terephthalate, but is not limited thereto.

The separator may have a pore diameter of 0.01 to 10 $\mu$m and a thickness of 3 to 100 $\mu$m, but is not limited thereto and may be a single-layer film or a multilayer film.

The lithium secondary battery may be manufactured by a manufacturing method commonly known in the art.

For example, the lithium secondary battery may be manufactured by interposing the separator between the positive electrode and the negative electrode to obtain a laminate, accommodating the laminate in a lithium secondary battery case in a wound or folded state, and injecting an electrolyte into the lithium secondary battery case, followed by sealing with a sealing member.

The external shape of the lithium secondary battery of the present invention is not particularly limited, but may be a cylindrical can shape, a square shape, a pouch shape, a thin film shape, or a coin shape.

Since the lithium secondary battery according to the present invention contains the phosphate-based compound represented by Formula 1, it has advantages of excellent reliability such as cycle life characteristics, high-temperature stability, high-temperature cycle life characteristics, and high-temperature voltage preservation stability.

Hereinafter, the present specification will be described in detail with reference to examples. However, the examples according to the present specification may be modified into various other forms, and the scope of the present specification is not construed as being limited to the examples described below. The examples in the present specification are provided to more fully explain the present specification to those of ordinary skill in the art. In addition, "%" and "part(s)" indicating the content in the following description are based on weight unless otherwise specified.

## Synthesis Example 1

1 equivalent of sodium monofluorophosphate was dissolved in a dimethylformamide solvent, and then 2 equivalents of trimethylsilyl chloride was added thereto dropwise at 0°C, followed by reaction at room temperature for 2 hours. After the reaction, extraction was performed with diethyl ether, and the solvent of the diethyl ether layer was removed and the remaining volatile material was removed by vacuum drying, thereby synthesizing a compound represented by Formula 2.

[Formula 2]

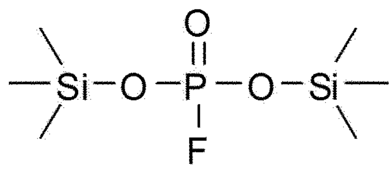

The results of analysis of the synthesized compound are as follows: $^1$H NMR $CDCl_3$ δ 0.3 ppm, P-NMR $CDCl_3$ δ-26 ppm, F-NMR $CDCl_3$ δ-72 ppm.

## Synthesis Example 2

1 equivalent of the compound represented by Formula 2 was dissolved in dimethyl carbonate, and then 1 equivalent of lithium hydroxide was added thereto and then allowed to react for 24 hours, thereby synthesizing a compound represented by Formula 3.

[Formula 3]

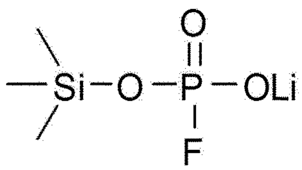

The results of analysis of the synthesized compound are as follows: $^1$H NMR $CDCl_3$ δ 0.3 ppm, P-NMR $CDCl_3$ δ -26 ppm, F-NMR $CDCl_3$ δ-72 ppm, and ICP-MS Li:P:Si ratio = 1:0.9:0.9 (calculated, 1:1:1).

## Synthesis Example 3

1 equivalent of the compound represented by Formula 2 was added dropwise to 0.6 equivalents of phosphorus pentachloride ($PCl_5$). When $PCl_5$ was completely dissolved, the volatile material was removed with a vacuum pump,

followed by distillation and purification, thereby synthesizing a compound represented by Formula 4.

[Formula 4]

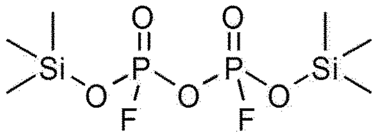

The results of analysis of the synthesized compound are as follows: $^{1}$H NMR $CDCl_3$ $\delta$ 0.3 ppm, P-NMR $CDCl_3$ $\delta$ -32 ppm, F-NMR $CDCl_3$ $\delta$-71 ppm.

## Synthesis Example 4

1 equivalent of the compound represented by Formula 4 was dissolved in dimethyl carbonate, and then 1 equivalent of lithium hydroxide was added thereto and then allowed to react for 24 hours, thereby synthesizing a compound represented by Formula 5.

[Formula 5]

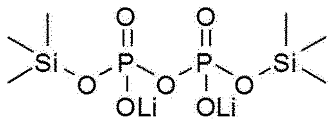

The results of analysis of the synthesized compound are as follows: $^{1}$H NMR $CDCl_3$ $\delta$ 0.3 ppm, P-NMR $CDCl_3$ $\delta$ -27 ppm, F-NMR $CDCl_3$ $\delta$-71 ppm, and ICP-MS Li:P:Si ratio = 1:1.9:1.9 (calculated, 1:2:2).

## Synthesis Example 5

1 equivalent of sodium difluorohyperphosphate was dissolved in a dimethylformamide solvent, and then 2 equivalents of trimethylsilyl chloride was added dropwise thereto at 0°C, followed by reaction at room temperature for 2 hours. After the reaction, extraction was performed with diethyl ether, the solvent of the diethyl ether layer was removed and the remaining volatile material was removed by vacuum drying, thereby synthesizing a compound represented by Formula 6.

[Formula 6]

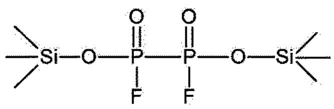

The results of analysis of the synthesized compound are as follows: $^{1}$H NMR $CDCl_3$ $\delta$ 0.3 ppm, P-NMR $CDCl_3$ $\delta$ -28 ppm, F-NMR $CDCl_3$ $\delta$-69 ppm.

## Synthesis Example 6

3 equivalents of the compound represented by Formula 2 was added dropwise to 1 equivalent of phosphonyl chloride and allowed to react for 4 hours, and then the volatile material was removed by a vacuum pump, followed by distillation and purification, thereby synthesizing a compound represented by Formula 7.

[Formula 7]

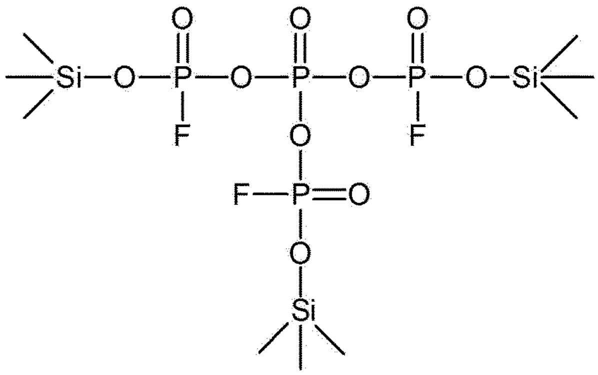

The results of analysis of the synthesized compound are as follows. $^{1}H$ NMR $CDCl_3$ $\delta$ 0.3 ppm, P-NMR $CDCl_3$ $\delta$ -28 ppm, F-NMR $CDCl_3$ $\delta$-72 ppm.

## Synthesis Example 7

1 equivalent of the compound represented by Formula 4 was added dropwise to 0.6 equivalents of phosphorus pentachloride ($PCl_5$). When $PCl_5$ was completely dissolved, the volatile material was removed by a vacuum pump, followed by distillation and purification, thereby synthesizing a compound represented by Formula 8. When the equivalent of Compound 1 is controlled in this way, the length of monofluorophosphate can be controlled.

[Formula 8]

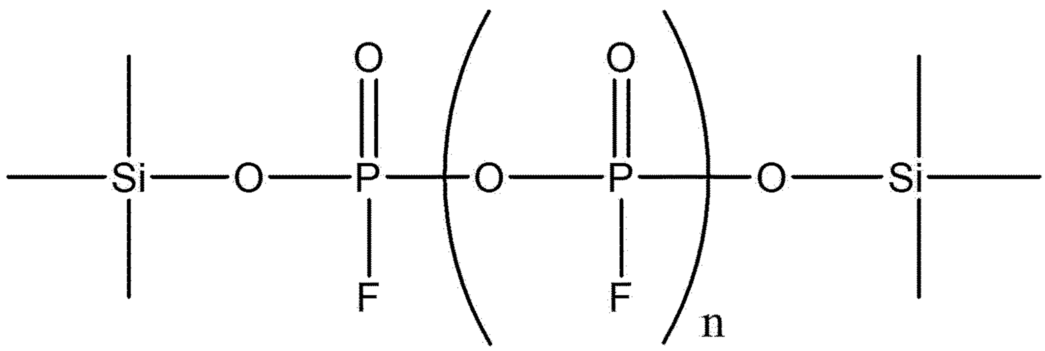

## Example 1

(1) Preparation of Positive and Negative Electrodes

97.3 parts by weight of $LiCoO_2$ as a positive electrode active material, 1.4 parts by weight of polyvinylidene fluoride as a binder, and 1.3 parts by weight of ketjen black as a conductive material were mixed together and then dispersed in N-methylpyrrolidone, thereby preparing a positive electrode active material slurry. The positive electrode active material slurry was applied to an aluminum foil, dried, and then rolled, thereby preparing a positive electrode.

In addition, 98 parts by weight of graphite as a negative electrode active material, 1 part by weight of polyvinylidene fluoride as a binder, and 1 part by weight of carbon black as a conductive material were mixed together and then dispersed in N-methylpyrrolidone, thereby preparing a negative active material layer composition. The composition was applied to a copper foil, dried, and then rolled, thereby preparing a negative electrode.

(2) Preparation of Electrolyte for Lithium Secondary Battery

A non-aqueous mixture solution was prepared by adding 0.95 M of $LiPF_6$ to a mixed solvent of ethylene

carbonate (EC): diethyl carbonate (DEC): ethyl propionate (EP) (volume ratio = 40:40:20).

3.0 parts by weight of the compound represented by Formula 2 was added to the non-aqueous mixture solution, thereby preparing an electrolyte for a lithium secondary battery.

[Formula 2]

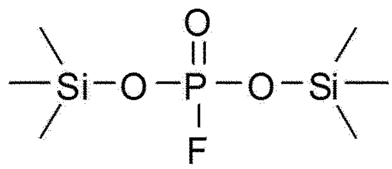

(3) Manufacturing of Lithium Secondary Battery

A lithium secondary battery was manufactured using the positive electrode and negative electrode prepared according to (1) and the electrolyte for a lithium secondary battery prepared according to (2).

**Example 2**

A lithium secondary battery was manufactured in the same manner as in Example 1, except that the compound represented by Formula 3 was added instead of the compound represented by Formula 2 when manufacturing the electrolyte for a lithium secondary battery.

[Formula 3]

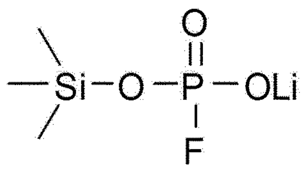

**Example 3**

A lithium secondary battery was manufactured in the same manner as in Example 1, except that the compound represented by Formula 4 was added instead of the compound represented by Formula 2 when manufacturing the electrolyte for a lithium secondary battery.

[Formula 4]

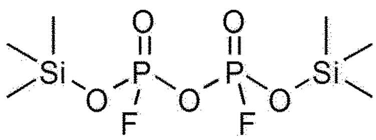

**Example 4**

A lithium secondary battery was manufactured in the same manner as in Example 1, except that the compound represented by Formula 5 was added instead of the compound represented by Formula 2 when manufacturing the electrolyte for a lithium secondary battery.

[Formula 5]

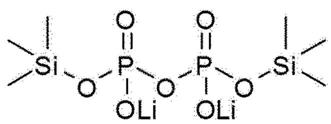

**Example 5**

A lithium secondary battery was manufactured in the same manner as in Example 1, except that the compound represented by Formula 6 was added instead of the compound represented by Formula 2 when manufacturing the electrolyte for a lithium secondary battery.

[Formula 6]

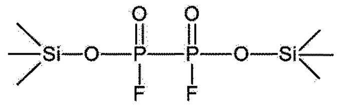

**Example 6**

A lithium secondary battery was manufactured in the same manner as in Example 1, except that the compound represented by Formula 7 was added instead of the compound represented by Formula 2 when manufacturing the electrolyte for a lithium secondary battery.

[Formula 7]

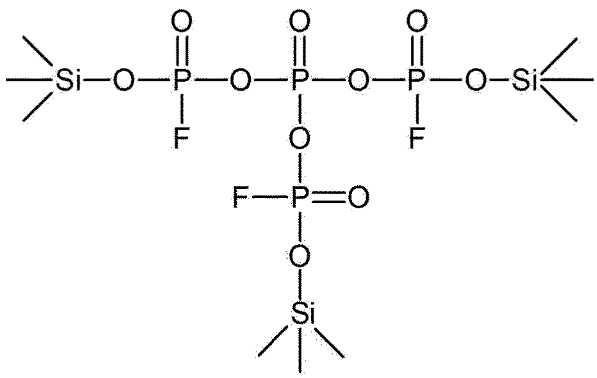

**Comparative Example 1**

(1) Preparation of Positive and Negative Electrodes

Positive and negative electrodes were prepared in the same manner as in Example 1.

(2) Preparation of Electrolyte for Lithium Secondary Battery

A non-aqueous mixture solution was prepared by adding 0.95 M of $LiPF_6$ to a mixed solvent of ethylene carbonate (EC): diethyl carbonate (DEC): ethyl propionate (EP) (volume ratio = 40:40:20).

(3) Manufacturing of Lithium Secondary Battery

A lithium secondary battery was manufactured using the positive electrode and negative electrode prepared according to (1) and the electrolyte for a lithium secondary battery prepared according to (2).

**Comparative Example 2**

A lithium secondary battery was manufactured in the same manner as in Example 1, except that lithium trioxalylphosphate (WCA3($LiP(C_2O_4)_3$)) was used instead of the compound represented by Formula 2.

**Comparative Example 3**

A lithium secondary battery was manufactured in the same manner as in Example 1, except that bis(oxalyl)difluorophosphate lithium salt (LiFOB($LiB(C_2O_4)_2$)) was used instead of the compound represented by Formula 2.

**Comparative Example 4**

A lithium secondary battery was manufactured in the same manner as in Example 1, except that trimethylsilyl phosphate represented by the following formula A was used instead of the compound represented by Formula 2.

[Formula A]

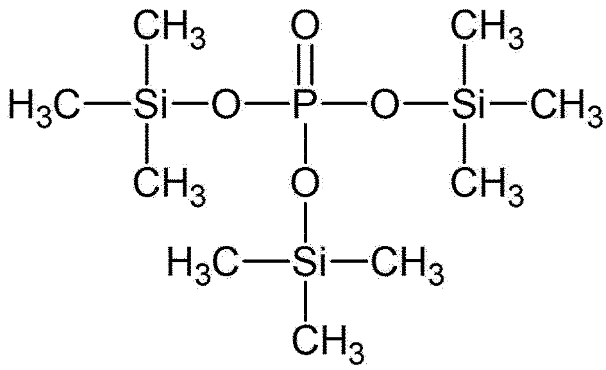

**Test Examples (1) to (3)**

Each of the secondary batteries manufactured according to Examples 1 to 6 and Comparative Examples 1 to 4 was charged at a constant current of 0.2 C at 25°C until the voltage reached 4.2 V, and then discharged at a constant current of 0.2 C until the voltage reached 2.5 V. Next, each secondary battery was charged at a constant current of 0.5 C until the voltage reached 4.2 V, and while 4.2 V was maintained, each secondary battery was charged at a constant voltage until the current reached 0.05 C. Next, each secondary battery was discharged at a constant current of 0.5 C until the voltage reached 2.5 V (formation step).

(1) Room-Temperature Cycle Life Characteristics

Each secondary battery subjected to the formation step was charged at a constant current of 1.0 C at 25°C until the voltage reached 4.2 V, and while 4.2 V was maintained, each secondary battery was charged at a constant voltage until the current reached 0.05 C. Then, each secondary battery was discharged at a constant current of 1.0 C until the voltage reached 2.5 V. This charging and discharging cycle was repeated 300 times.

The capacity retention ratio (%) of each secondary battery at the 300$^{th}$ cycle was calculated by the following Equation 1, and the results are shown in Table 1 below.

[Equation 1]

Capacity retention rate [%]=[discharge capacity at the 300$^{th}$ cycle/discharge capacity at the first cycle]x100

(2) High-Temperature Voltage Preservation Stability

Each secondary battery subjected to the formation step was charged at a constant current of 1.0 C at 25°C until the voltage reached 4.2 V, and while 4.2 V was maintained, each secondary battery was charged at a constant voltage until the current reached 0.05 C. Subsequently, while each charged secondary battery was stored at 60°C, the voltage was measured every 24 hours using a multi-meter to measure the residual voltage of the charged-state cell at the high temperature, thereby determining high-temperature voltage preservation stability.

The voltage retention rate (%) of each secondary battery on 15th day of the measurement was calculated by the following Equation 2, and the results are shown in Table 1 below.

[Equation 2]

$$\text{Voltage retention rate } [\%] = [\text{Open circuit voltage on } 15^{th} \text{ day/initial open circuit voltage}] \times 100$$

(3) Internal Resistance Increase Rate

The internal resistances of the batteries manufactured in the Examples and the Comparative Examples were measured. For internal resistance measurement, the battery capacity was adjusted to 50% (SOC=50%), and currents of 0.5 A, 1 A, 2 A, 3 A, and 5 A were allowed to flow, and the battery voltage after 10 seconds was measured. The measured current and voltage were linearly approximated and the internal resistance was calculated from the slope. In the charging and discharging repeated by the above method, the resistance increase rate indicating the increase rate of the internal resistance was evaluated.

The resistance increase rate was calculated by the following Equation 3, and the results are shown in Table 1 below.

[Equation 3]

$$\text{Resistance increase rate } R_{ma}(\%) = (R300 - R1)/R1 \times 100,$$

wherein R1 is the initial internal resistance (Ω) at the first cycle in the charge/discharge cycle test, and R300 is the internal resistance (Ω) at the 300th cycle.

[Table 1]

| | **Positive electrode/negative electrode** | **Electrolyte** | **Room-temperature cycle life characteristic (%)** | **High-temperature voltage preservation stability (%)** | **Internal resistance increase rate (%)** |
|---|---|---|---|---|---|
| Example 1 | LCO/Gr | Formula 2 | 81.80 | 83.10 | 35 |
| Example 2 | LCO/Gr | Formula 3 | 86.10 | 83.80 | 38 |
| Example 3 | LCO/Gr | Formula 4 | 87.50 | 83.90 | 42 |
| Example 4 | LCO/Gr | Formula 5 | 86.20 | 84.60 | 25 |
| Example 5 | LCO/Gr | Formula 6 | 87.40 | 83.30 | 46 |
| Example 6 | LCO/Gr | Formula 7 | 87.40 | 82.40 | 45 |
| Comparative Example 1 | LCO/Gr | - | 76.30 | 70.30 | 279 |
| Comparative Example 2 | LCO/Gr | WCA3 | 86.30 | 83.60 | 72 |
| Comparative Example 3 | LCO/Gr | LiFOB | 86.30 | 78.60 | 68 |
| Comparative Example 4 | LCO/Gr | Trimethylsilyl phosphate | 77.43 | 72.71 | 178 |

Referring to Table 1, it can be seen that, in the case of the Examples including the electrolyte for a lithium secondary battery containing the phosphate-based compound according to the present invention, the lithium secondary

batteries have excellent room-temperature cycle life characteristics and high-temperature voltage preservation stability and low internal resistance increase rates, suggesting that the batteries of the Examples exhibit excellent performance.

However, it can be confirmed that, in the case of Comparative Examples 1 to 4 that do not contain the phosphate-based compound according to the present invention, the room-temperature cycle life characteristics, high-temperature voltage preservation stability and internal resistance increase rates of the batteries are generally poor compared to those of the Examples.

**Example 7**

(1) Preparation of Positive and Negative Electrodes

97.3 parts by weight of NCM622 as a positive electrode active material, 1.4 parts by weight of polyvinylidene fluoride as a binder, and 1.3 parts by weight of ketjen black as a conductive material were mixed together and then dispersed in N-methylpyrrolidone, thereby preparing a positive electrode active material slurry. The positive electrode active material slurry was applied to an aluminum foil, dried, and then rolled, thereby preparing a positive electrode.

In addition, 98 parts by weight of graphite as a negative electrode active material, 1 part by weight of polyvinylidene fluoride as a binder, and 1 part by weight of carbon black as a conductive material were mixed together and then dispersed in N-methylpyrrolidone, thereby preparing a negative electrode active material layer composition. Then, the composition was applied to a copper foil, dried, and then rolled, thereby preparing a negative electrode.

(2) Preparation of Electrolyte for Lithium Secondary Battery

A non-aqueous mixture solution was prepared by adding 1.0 M of $LiPF_6$ to a mixed solvent of ethylene carbonate (EC): ethyl methyl carbonate (EMC): dimethyl carbonate (DMC) (volume ratio = 2:4:4).

1 part by weight of vinylene carbonate and 0.5 parts by weight of the compound represented by Formula 2 were added to the non-aqueous mixture solution, thereby preparing an electrolyte for a lithium secondary battery.

[Formula 2]

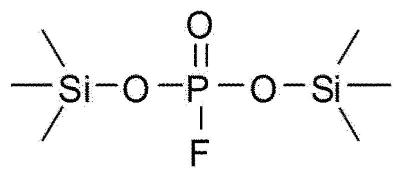

(3) Manufacturing of Lithium Secondary Battery

A lithium secondary battery was manufactured using the positive electrode and negative electrode prepared according to (1) and the electrolyte for a lithium secondary battery prepared according to (2).

**Example 8**

A lithium secondary battery was manufactured in the same manner as in Example 7, except that 1 part by weight of vinylene carbonate and 1.0 part by weight of the compound represented by Formula 2 were added to the mixture solution.

**Example 9**

A lithium secondary battery was manufactured in the same manner as in Example 7, except that 1 part by weight of vinylene carbonate and 1.5 parts by weight of the compound represented by Formula 2 were added to the mixture solution.

**Example 10**

A lithium secondary battery was manufactured in the same manner as in Example 7, except that 3 parts by weight of fluoroethylene carbonate and 0.5 parts by weight of the compound represented by Formula 2 were added to the mixture solution.

**Example 11**

A lithium secondary battery was manufactured in the same manner as in Example 7, except that 3 parts by weight of fluoroethylene carbonate and 1.0 part by weight of the compound represented by Formula 2 were added to the mixture solution.

**Example 12**

A lithium secondary battery was manufactured in the same manner as in Example 7, except that 3 parts by weight of fluoroethylene carbonate and 1.5 part by weight of the compound represented by Formula 2 were added to the mixture solution.

**Example 13**

(1) Preparation of Positive and Negative Electrodes

97.3 parts by weight of NCM811 as a positive electrode active material, 1.4 parts by weight of polyvinylidene fluoride as a binder, and 1.3 parts by weight of ketjen black as a conductive material were mixed together and then dispersed in N-methylpyrrolidone, thereby preparing a positive electrode active material slurry. The positive electrode active material slurry was applied to an aluminum foil, dried, and then rolled, thereby preparing a positive electrode.

In addition, 98 parts by weight of graphite as a negative electrode active material, 1 part by weight of polyvinylidene fluoride as a binder, and 1 part by weight of carbon black as a conductive material were mixed together and then dispersed in N-methylpyrrolidone, thereby preparing a negative electrode active material layer composition. Then, the composition was applied to a copper foil, dried, and then rolled, thereby preparing a negative electrode.

(2) Preparation of Electrolyte for Lithium Secondary Battery

A non-aqueous mixture solution was prepared by adding 1.0 M of $LiPF_6$ to a mixed solvent of ethylene carbonate (EC): ethyl methyl carbonate (EMC): dimethyl carbonate (DMC) (volume ratio = 2:4:4).

1 part by weight of vinylene carbonate and 0.5 parts by weight of the compound represented by Formula 2 were added to the non-aqueous mixture solution, thereby preparing an electrolyte for a lithium secondary battery.

(3) Manufacturing of Lithium Secondary Battery

A lithium secondary battery was manufactured using the positive electrode and negative electrode prepared according to (1) and the electrolyte for a lithium secondary battery prepared according to (2).

**Example 14**

A lithium secondary battery was manufactured in the same manner as in Example 13, except that 1 part by weight of vinylene carbonate and 1.0 part by weight of the compound represented by Formula 2 were added to the mixture solution.

**Example 15**

A lithium secondary battery was manufactured in the same manner as in Example 13, except that 1 part by weight of vinylene carbonate and 1.5 parts by weight of the compound represented by Formula 2 were added to the mixture solution.

**Comparative Example 5**

(1) Preparation of Positive and Negative Electrodes

Positive and negative electrodes were prepared in the same manner as in Example 7.

(2) Preparation of Electrolyte for Lithium Secondary Battery

A non-aqueous mixture solution was prepared by adding 1.0 M of $LiPF_6$ to a mixed solvent of ethylene carbonate

(EC): ethyl methyl carbonate (EMC): dimethyl carbonate (DMC) (volume ratio = 2:4:4).

(3) Manufacturing of Lithium Secondary Battery

A lithium secondary battery was manufactured using the positive electrode and negative electrode prepared according to (1) and the electrolyte for a lithium secondary battery prepared according to (2).

**Comparative Example 6**

A lithium secondary battery was manufactured in the same manner as in Comparative Example 5, except that 1 part by weight of vinylene carbonate was added to the mixture solution.

**Comparative Example 7**

A lithium secondary battery was manufactured in the same manner as in Comparative Example 5, except that 1 part by weight of vinylene carbonate and 1 part by weight of $LiPO_2F_2$ were added to the mixture solution.

**Comparative Example 8**

A lithium secondary battery was manufactured in the same manner as in Comparative Example 5, except that 3 parts by weight of fluoroethylene carbonate was added to the mixture solution.

**Comparative Example 9**

A lithium secondary battery was manufactured in the same manner as in Comparative Example 5, except that 3 parts by weight of fluoroethylene carbonate and 1 part by weight of $LiPO_2F_2$ were added to the mixture solution.

**Comparative Example 10**

(1) Preparation of Positive and Negative Electrodes

Positive and negative electrodes were prepared in the same manner as in Example 13.

(2) Preparation of Electrolyte for Lithium Secondary Battery

A non-aqueous mixture solution was prepared by adding 1.0 M of $LiPF_6$ to a mixed solvent of ethylene carbonate (EC): ethyl methyl carbonate (EMC): dimethyl carbonate (DMC) (volume ratio = 2:4:4).

(3) Manufacturing of Lithium Secondary Battery

A lithium secondary battery was manufactured using the positive electrode and negative electrode prepared according to (1) and the electrolyte for a lithium secondary battery prepared according to (2).

**Comparative Example 11**

A lithium secondary battery was manufactured in the same manner as in Comparative Example 10, except that 1 part by weight of vinylene carbonate was added to the mixture solution.

**Comparative Example 12**

A lithium secondary battery was manufactured in the same manner as in Comparative Example 10, except that 1 part by weight of vinylene carbonate and 1 part by weight of $LiPO_2F_2$ were added to the mixture solution.

**Test Examples (4) to (7)**

Each of the secondary batteries manufactured according to Examples 7 to 15 and Comparative Examples 5 to 12 was charged at a constant current of 0.2 C at 25°C until the voltage reached 4.2 V, and then discharged at a constant current of 0.2 C until the voltage reached 2.5 V. Next, each secondary battery was charged at a constant current

of 0.5 C until the voltage reached 4.2 V, and while 4.2 V was maintained, each secondary battery was charged at a constant voltage until the current reached 0.05 C. Next, each secondary battery was discharged at a constant current of 0.5 C until the voltage reached 2.5 V (formation step).

(4) High-Temperature Cycle Life Characteristics

Each secondary battery subjected to the formation step was charged at a constant current of 1.0 C at 45°C until the voltage reached 4.2 V, and while 4.2 V was maintained, each secondary battery was charged at a constant voltage until the current reached 0.05 C. Then, each secondary battery was discharged at a constant current of 1.0 C until the voltage reached 2.5 V. This charging and discharging cycle was repeated 300 times.
The capacity retention ratio (%) of each secondary battery at the $300^{th}$ cycle was calculated by the following Equation 4, and the results are shown in Table 2 below.

[Equation 4]

Capacity retention rate [%]=[discharge capacity at the $300^{th}$ cycle/discharge capacity at the first cycle]x100

(5) High-Temperature Voltage Preservation Stability

Each secondary battery subjected to the formation step was charged at a constant current of 1.0 C at 25°C until the voltage reached 4.2 V, and while 4.2 V was maintained, each secondary battery was charged at a constant voltage until the current reached 0.05 C. Subsequently, while each charged secondary battery was stored at 60°C, the voltage was measured every 24 hours using a multi-meter to measure the residual voltage of the charged-state cell at the high temperature, thereby determining high-temperature voltage preservation stability.
The voltage retention rate (%) of each secondary battery on $30^{th}$ day of the measurement was calculated by the following Equation 5.

[Equation 5]

Voltage retention rate [%]=[Open circuit voltage on $30^{th}$ day/initial open circuit voltage]x100

(6) Room-Temperature Cycle Life Characteristics

Each secondary battery subjected to the formation step was charged at a constant current of 1.0 C at 25°C until the voltage reached 4.2 V, and while 4.2 V was maintained, each secondary battery was charged at a constant voltage until the current reached 0.05 C. Then, each secondary battery was discharged at a constant current of 1.0 C until the voltage reached 2.5 V. This charging and discharging cycle was repeated 300 times.
The capacity retention ratio (%) of each secondary battery at the $300^{th}$ cycle was calculated by the following Equation 6, and the results are shown in Table 2 below.

[Equation 6]

Capacity retention rate [%]=[discharge capacity at the $300^{th}$ cycle/discharge capacity at the first cycle]x100

(7) Combustion Test Evaluation

After the electrolytes prepared in the Examples and the Comparative Examples were exposed to the test flame in the atmosphere, the test flame was moved away, the appearance of the igniting flame was visually observed, and the time until the flame was extinguished was measured. The case where the extinguishing time was shorter than 10 seconds

was regarded as flame retardant, and the case where the extinguishing time was equal to or longer than 10 seconds was regarded as combustible. The results are shown in Table 2 below.

<Evaluation criteria>

Flame retardant: extinguishing time shorter than 10 seconds

Combustible: extinguishing time equal to or longer than 10 seconds

[Table 2]

| | High-temperature cycle life characteristic (%) | High-temperature voltage preservation stability (%) | Room-temperature cycle life characteristic (%) | Combustion test evaluation |
|---|---|---|---|---|
| Example 7 | 73.78 | 94.68 | 86.29 | Flame retardant |
| Example 8 | 76.39 | 94.74 | 88.43 | Flame retardant |
| Example 9 | 81.00 | 94.45 | 89.31 | Flame retardant |
| Example 10 | 81.63 | 93.33 | 82.32 | Flame retardant |
| Example 11 | 84.48 | 93.46 | 83.41 | Flame retardant |
| Example 12 | 87.84 | 93.58 | 85.14 | Flame retardant |
| Example 13 | 81.43 | 95.97 | 92.37 | Flame retardant |
| Example 14 | 82.00 | 96.02 | 92.89 | Flame retardant |
| Example 15 | 82.15 | 95.51 | 93.04 | Flame retardant |
| Comparative Example 5 | 70.44 | 94.61 | 79.71 | Combustible |
| Comparative Example 6 | 83.10 | 94.94 | 81.65 | Combustible |
| Comparative Example 7 | 72.21 | 94.03 | 82.11 | Combustible |
| Comparative Example 8 | 78.02 | 94.47 | 80.14 | Combustible |
| Comparative Example 9 | 69.35 | 93.45 | 80.49 | Combustible |
| Comparative Example 10 | 63.28 | 95.07 | 85.49 | Combustible |
| Comparative Example 11 | 75.40 | 95.31 | 86.62 | Combustible |
| Comparative Example 12 | 64.60 | 93.44 | 85.83 | Flame retardant |

Referring to Table 2, it can be confirmed that, in the case of the Examples including the electrolyte for a lithium secondary battery containing the phosphate-based compound according to the present invention, the secondary batteries have excellent room-temperature and high-temperature cycle life characteristics and high-temperature voltage preservation stability, and show flame retardancy as a result of the combustion test evaluation, suggesting that these batteries have excellent high-temperature stability. In addition, it can be confirmed that, in the case of the Examples including the positive electrode including lithium and nickel, the secondary batteries have better room-temperature and high-temperature cycle life characteristics and high-temperature voltage preservation stability characteristics.

However, it can be confirmed that, in the case of a Comparative Examples that do not include the electrolyte for a lithium secondary battery containing the phosphate-based compound according to the present invention, one or more characteristics among room-temperature and high-temperature cycle life characteristics, high-temperature voltage preservation stability characteristics, and combustion test evaluation results are very poor.

## Claims

1. An electrolyte for a lithium secondary battery containing a phosphate-based compound represented by the following Formula 1:

[Formula 1]

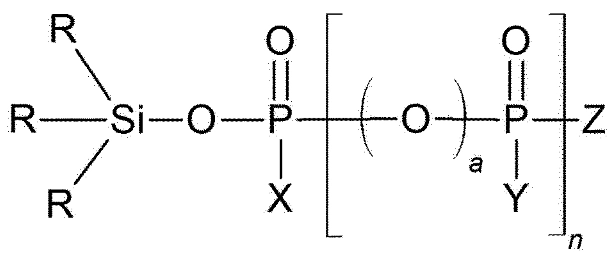

wherein

X is a halogen or -OM,
Ys are each independently a halogen, -OM or $-OPOZ_2$,
Zs are each independently a halogen, $-OSiR_3$ or -OM,
Rs are each independently a C1 to C6 alkyl group or allyl group,
Ms are each independently lithium, sodium or potassium,
a is 0 or 1, and
n is an integer ranging from 0 to 6.

2. The electrolyte of claim 1, wherein the phosphate-based compound represented by Formula 1 is represented by any one of the following Formulas 2 to 7:

[Formula 2]

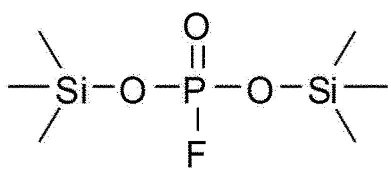

[Formula 3]

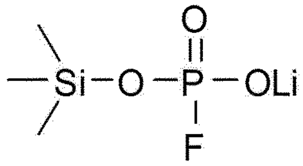

[Formula 4]

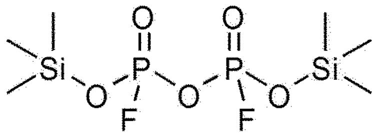

[Formula 5]

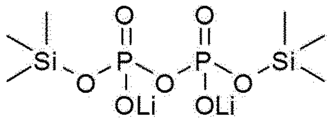

[Formula 6]

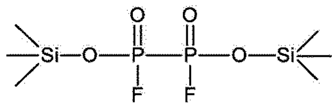

[Formula 7]

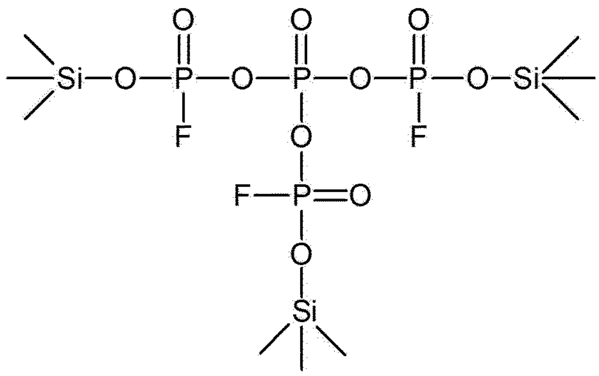

3. The electrolyte of claim 1, wherein the phosphate-based compound is contained in an amount of 0.01 to 30 parts by weight based on 100 parts by weight of the total weight of the electrolyte for a lithium secondary battery.

4. The electrolyte of claim 1, wherein the phosphate-based compound is contained in an amount of 0.1 to 10 parts by weight based on 100 parts by weight of the total weight of the electrolyte for a lithium secondary battery.

5. The electrolyte of claim 1, further containing at least one selected from the group consisting of a lithium salt and an organic solvent.

6. A lithium secondary battery comprising: a positive electrode; a negative electrode; and the electrolyte for a lithium secondary battery according to claim 1.

**7.** The lithium secondary battery of claim 6, wherein the positive electrode comprises at least one positive electrode active material selected from the group consisting of complex oxides or complex phosphates of lithium and a metal selected from among cobalt, nickel, aluminum, iron, and combinations thereof.

**8.** The lithium secondary battery of claim 6, wherein the positive electrode comprises at least one positive electrode active material selected from the group consisting of lithium cobalt oxide, lithium nickel oxide, lithium nickel cobalt manganese oxide, lithium nickel cobalt aluminum oxide, and lithium iron phosphate.

**INTERNATIONAL SEARCH REPORT**

International application No. **PCT/KR2020/011861**

**A. CLASSIFICATION OF SUBJECT MATTER**

**H01M 10/0567**(2010.01)i; **H01M 10/052**(2010.01)i; **C07F 9/14**(2006.01)i; **C07F 9/09**(2006.01)i

According to International Patent Classification (IPC) or to both national classification and IPC

**B. FIELDS SEARCHED**

Minimum documentation searched (classification system followed by classification symbols)

H01M 10/0567; H01M 10/05; H01M 10/052; H01M 10/0569; H01M 4/505; C07F 9/14; C07F 9/09

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 전해질(electrolyte), 포스페이트(phosphate), 트리알킬실릴(trialkylsilyl)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1297174 B1 (SAMSUNG SDI CO., LTD.) 21 August 2013. See claims 1, 3 and 10; and paragraph [0139]. | 1-8 |
| Y | ROVNANIK, P. et al. Synthesis and characterisation of trimethylsilyl phosphor ohalidates: Me3SiOP (O) FX (X= Cl, Br) and (Me3SiO)2P2O3F2. Journal of fluorine chemistry. 2004, vol. 125, no. 1, pp. 83-90. See abstract; and formula 3. | 1-8 |
| A | KR 10-1548851 B1 (MITSUBISHI CHEMICAL CORPORATION) 01 September 2015. See claims 1 and 2. | 1-8 |
| A | KR 10-1345052 B1 (MITSUBISHI CHEMICAL CORPORATION) 26 December 2013. See claim 1. | 1-8 |
| A | KR 10-2010-0137415 A (GS YUASA INTERNATIONAL LTD.) 30 December 2010. See claims 1-6. | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 December 2020** | **11 December 2020** |

| Name and mailing address of the ISA/KR | Authorized officer |
|---|---|
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2020/011861**

| Patent document cited in search report | Publication date (day/month/year) | Patent family member(s) | Publication date (day/month/year) |
|---|---|---|---|
| KR 10-1297174 B1 | 21 August 2013 | US 2012-0202122 A1 | 09 August 2012 |
| | | US 8936881 B2 | 20 January 2015 |
| KR 10-1548851 B1 | 01 September 2015 | CN 101292389 A | 22 October 2008 |
| | | CN 101292389 B | 22 September 2010 |
| | | CN 101894974 A | 24 November 2010 |
| | | CN 102324567 A | 18 January 2012 |
| | | CN 102931434 A | 13 February 2013 |
| | | CN 102931434 B | 16 September 2015 |
| | | CN 104659414 A | 27 May 2015 |
| | | CN 104659414 B | 12 April 2019 |
| | | CN 104752642 A | 01 July 2015 |
| | | CN 104752642 B | 20 April 2018 |
| | | CN 105186038 A | 23 December 2015 |
| | | CN 105186038 B | 28 July 2017 |
| | | CN 105375064 A | 02 March 2016 |
| | | CN 107069091 A | 18 August 2017 |
| | | CN 110010850 A | 12 July 2019 |
| | | CN 110061283 A | 26 July 2019 |
| | | EP 1939971 A1 | 02 July 2008 |
| | | EP 2560229 A2 | 20 February 2013 |
| | | EP 2560229 A3 | 17 August 2016 |
| | | EP 2560229 B1 | 05 June 2019 |
| | | EP 3217463 A1 | 13 September 2017 |
| | | EP 1939971 A4 | 10 August 2016 |
| | | EP 3217463 B1 | 05 June 2019 |
| | | EP 3557684 A2 | 23 October 2019 |
| | | EP 3557684 A3 | 11 March 2020 |
| | | JP 4952186 B2 | 13 June 2012 |
| | | JP 5003095 B2 | 15 August 2012 |
| | | JP 5402974 B2 | 29 January 2014 |
| | | JP 5503098 B2 | 28 May 2014 |
| | | JP 5514394 B2 | 04 June 2014 |
| | | JP 5636622 B2 | 10 December 2014 |
| | | JP 5636623 B2 | 10 December 2014 |
| | | JP 5671770 B2 | 18 February 2015 |
| | | JP 5671771 B2 | 18 February 2015 |
| | | JP 5671772 B2 | 18 February 2015 |
| | | JP 5671773 B2 | 18 February 2015 |
| | | JP 5671774 B2 | 18 February 2015 |
| | | JP 5671775 B2 | 18 February 2015 |
| | | JP 5740802 B2 | 01 July 2015 |
| | | JP 5741599 B2 | 01 July 2015 |
| | | JP 5916268 B2 | 11 May 2016 |
| | | JP 6107926 B2 | 05 April 2017 |
| | | JP 6627904 B2 | 08 January 2020 |
| | | JP 6738721 B2 | 12 August 2020 |
| | | JP 2007-141830 A | 07 June 2007 |
| | | JP 2007-141831 A | 07 June 2007 |
| | | JP 2007-149654 A | 14 June 2007 |
| | | JP 2007-149656 A | 14 June 2007 |

Form PCT/ISA/210 (patent family annex) (July 2019)

**INTERNATIONAL SEARCH REPORT**
**Information on patent family members**

International application No.
**PCT/KR2020/011861**

| Patent document cited in search report | Publication date (day/month/year) | Patent family member(s) | Publication date (day/month/year) |
|---|---|---|---|
| | | JP 2007-165292 A | 28 June 2007 |
| | | JP 2007-165294 A | 28 June 2007 |
| | | JP 2007-165296 A | 28 June 2007 |
| | | JP 2007-165297 A | 28 June 2007 |
| | | JP 2007-165298 A | 28 June 2007 |
| | | JP 2007-165299 A | 28 June 2007 |
| | | JP 2007-165301 A | 28 June 2007 |
| | | JP 2007-173222 A | 05 July 2007 |
| | | JP 2007-180015 A | 12 July 2007 |
| | | JP 2007-180016 A | 12 July 2007 |
| | | JP 2007-180025 A | 12 July 2007 |
| | | JP 2007-184257 A | 19 July 2007 |
| | | JP 2007-188871 A | 26 July 2007 |
| | | JP 2007-194207 A | 02 August 2007 |
| | | JP 2007-194208 A | 02 August 2007 |
| | | JP 2007-194209 A | 02 August 2007 |
| | | JP 2007-200871 A | 09 August 2007 |
| | | JP 2007-214120 A | 23 August 2007 |
| | | JP 2007-220670 A | 30 August 2007 |
| | | JP 2007-227367 A | 06 September 2007 |
| | | JP 2007-227368 A | 06 September 2007 |
| | | JP 2010-062164 A | 18 March 2010 |
| | | JP 2011-142112 A | 21 July 2011 |
| | | JP 2013-138012 A | 11 July 2013 |
| | | JP 2013-145762 A | 25 July 2013 |
| | | JP 2014-082220 A | 08 May 2014 |
| | | JP 2016-035933 A | 17 March 2016 |
| | | JP 2017-054833 A | 16 March 2017 |
| | | JP 2018-092957 A | 14 June 2018 |
| | | JP 2019-117811 A | 18 July 2019 |
| | | JP 2020-064873 A | 23 April 2020 |
| | | KR 10-1345052 B1 | 26 December 2013 |
| | | KR 10-1930127 B1 | 17 December 2018 |
| | | KR 10-2008-0056226 A | 20 June 2008 |
| | | KR 10-2013-0090913 A | 14 August 2013 |
| | | KR 10-2015-0038605 A | 08 April 2015 |
| | | KR 10-2016-0092063 A | 03 August 2016 |
| | | KR 10-2017-0094002 A | 16 August 2017 |
| | | KR 10-2018-0135098 A | 19 December 2018 |
| | | KR 10-2020-0040930 A | 20 April 2020 |
| | | KR 10-2062521 B1 | 06 January 2020 |
| | | KR 10-2102105 B1 | 20 April 2020 |
| | | US 2010-0015514 A1 | 21 January 2010 |
| | | US 2013-0022861 A1 | 24 January 2013 |
| | | US 2015-0243936 A1 | 27 August 2015 |
| | | US 2017-0040593 A1 | 09 February 2017 |
| | | US 2019-0252672 A1 | 15 August 2019 |
| | | US 9029022 B2 | 12 May 2015 |
| | | US 9112236 B2 | 18 August 2015 |
| | | WO 2007-055087 A1 | 18 May 2007 |

Form PCT/ISA/210 (patent family annex) (July 2019)

**INTERNATIONAL SEARCH REPORT**
**Information on patent family members**

International application No.
**PCT/KR2020/011861**

| Patent document cited in search report | Publication date (day/month/year) | Patent family member(s) | Publication date (day/month/year) |
|---|---|---|---|
| KR 10-1345052 B1 | 26 December 2013 | CN 101292389 A | 22 October 2008 |
| | | CN 101292389 B | 22 September 2010 |
| | | CN 101894974 A | 24 November 2010 |
| | | CN 102324567 A | 18 January 2012 |
| | | CN 102931434 A | 13 February 2013 |
| | | CN 102931434 B | 16 September 2015 |
| | | CN 104659414 A | 27 May 2015 |
| | | CN 104659414 B | 12 April 2019 |
| | | CN 104752642 A | 01 July 2015 |
| | | CN 104752642 B | 20 April 2018 |
| | | CN 105186038 A | 23 December 2015 |
| | | CN 105186038 B | 28 July 2017 |
| | | CN 105375064 A | 02 March 2016 |
| | | CN 107069091 A | 18 August 2017 |
| | | CN 110010850 A | 12 July 2019 |
| | | CN 110061283 A | 26 July 2019 |
| | | EP 1939971 A1 | 02 July 2008 |
| | | EP 2560229 A2 | 20 February 2013 |
| | | EP 1939971 A4 | 10 August 2016 |
| | | EP 2560229 A3 | 17 August 2016 |
| | | EP 2560229 B1 | 05 June 2019 |
| | | EP 3217463 A1 | 13 September 2017 |
| | | EP 3217463 B1 | 05 June 2019 |
| | | EP 3557684 A2 | 23 October 2019 |
| | | EP 3557684 A3 | 11 March 2020 |
| | | JP 4952186 B2 | 13 June 2012 |
| | | JP 5003095 B2 | 15 August 2012 |
| | | JP 5402974 B2 | 29 January 2014 |
| | | JP 5503098 B2 | 28 May 2014 |
| | | JP 5514394 B2 | 04 June 2014 |
| | | JP 5636622 B2 | 10 December 2014 |
| | | JP 5636623 B2 | 10 December 2014 |
| | | JP 5671770 B2 | 18 February 2015 |
| | | JP 5671771 B2 | 18 February 2015 |
| | | JP 5671772 B2 | 18 February 2015 |
| | | JP 5671773 B2 | 18 February 2015 |
| | | JP 5671774 B2 | 18 February 2015 |
| | | JP 5671775 B2 | 18 February 2015 |
| | | JP 5740802 B2 | 01 July 2015 |
| | | JP 5741599 B2 | 01 July 2015 |
| | | JP 5916268 B2 | 11 May 2016 |
| | | JP 6107926 B2 | 05 April 2017 |
| | | JP 6627904 B2 | 08 January 2020 |
| | | JP 6738721 B2 | 12 August 2020 |
| | | JP 2007-141830 A | 07 June 2007 |
| | | JP 2007-141831 A | 07 June 2007 |
| | | JP 2007-149654 A | 14 June 2007 |
| | | JP 2007-149656 A | 14 June 2007 |
| | | JP 2007-165292 A | 28 June 2007 |
| | | JP 2007-165294 A | 28 June 2007 |

Form PCT/ISA/210 (patent family annex) (July 2019)

**INTERNATIONAL SEARCH REPORT**
**Information on patent family members**

International application No.
**PCT/KR2020/011861**

| Patent document cited in search report | Publication date (day/month/year) | Patent family member(s) | Publication date (day/month/year) |
|---|---|---|---|
| | | JP 2007-165296 A | 28 June 2007 |
| | | JP 2007-165297 A | 28 June 2007 |
| | | JP 2007-165298 A | 28 June 2007 |
| | | JP 2007-165299 A | 28 June 2007 |
| | | JP 2007-165301 A | 28 June 2007 |
| | | JP 2007-173222 A | 05 July 2007 |
| | | JP 2007-180015 A | 12 July 2007 |
| | | JP 2007-180016 A | 12 July 2007 |
| | | JP 2007-180025 A | 12 July 2007 |
| | | JP 2007-184257 A | 19 July 2007 |
| | | JP 2007-188871 A | 26 July 2007 |
| | | JP 2007-194207 A | 02 August 2007 |
| | | JP 2007-194208 A | 02 August 2007 |
| | | JP 2007-194209 A | 02 August 2007 |
| | | JP 2007-200871 A | 09 August 2007 |
| | | JP 2007-214120 A | 23 August 2007 |
| | | JP 2007-220670 A | 30 August 2007 |
| | | JP 2007-227367 A | 06 September 2007 |
| | | JP 2007-227368 A | 06 September 2007 |
| | | JP 2010-062164 A | 18 March 2010 |
| | | JP 2011-142112 A | 21 July 2011 |
| | | JP 2013-138012 A | 11 July 2013 |
| | | JP 2013-145762 A | 25 July 2013 |
| | | JP 2014-082220 A | 08 May 2014 |
| | | JP 2016-035933 A | 17 March 2016 |
| | | JP 2017-054833 A | 16 March 2017 |
| | | JP 2018-092957 A | 14 June 2018 |
| | | JP 2019-117811 A | 18 July 2019 |
| | | JP 2020-064873 A | 23 April 2020 |
| | | KR 10-1548851 B1 | 01 September 2015 |
| | | KR 10-1930127 B1 | 17 December 2018 |
| | | KR 10-2013-0090913 A | 14 August 2013 |
| | | KR 10-2014-0005341 A | 14 January 2014 |
| | | KR 10-2015-0038605 A | 08 April 2015 |
| | | KR 10-2016-0092063 A | 03 August 2016 |
| | | KR 10-2017-0094002 A | 16 August 2017 |
| | | KR 10-2018-0135098 A | 19 December 2018 |
| | | KR 10-2020-0040930 A | 20 April 2020 |
| | | KR 10-2062521 B1 | 06 January 2020 |
| | | KR 10-2102105 B1 | 20 April 2020 |
| | | US 2010-0015514 A1 | 21 January 2010 |
| | | US 2013-0022861 A1 | 24 January 2013 |
| | | US 2015-0243936 A1 | 27 August 2015 |
| | | US 2017-0040593 A1 | 09 February 2017 |
| | | US 2019-0252672 A1 | 15 August 2019 |
| | | US 9029022 B2 | 12 May 2015 |
| | | US 9112236 B2 | 18 August 2015 |
| | | WO 2007-055087 A1 | 18 May 2007 |
| KR 10-2010-0137415 A | 30 December 2010 | CN 101939874 A | 05 January 2011 |
| | | CN 101939874 B | 13 March 2013 |

Form PCT/ISA/210 (patent family annex) (July 2019)

**INTERNATIONAL SEARCH REPORT**
**Information on patent family members**

International application No.
**PCT/KR2020/011861**

| Patent document cited in search report | Publication date (day/month/year) | Patent family member(s) | | | Publication date (day/month/year) |
|---|---|---|---|---|---|
| | | EP | 2262047 | A1 | 15 December 2010 |
| | | EP | 2262047 | A4 | 23 May 2012 |
| | | EP | 2262047 | B1 | 29 April 2015 |
| | | JP | 5429631 | B2 | 26 February 2014 |
| | | US | 2011-0027663 | A1 | 03 February 2011 |
| | | US | 8501356 | B2 | 06 August 2013 |
| | | WO | 2009-110490 | A1 | 11 September 2009 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004031079 A